# EUROPEAN PATENT APPLICATION

(11) **EP 4 661 581 A1**
(43) Date of publication of application: **10.12.2025**
(21) Application number: 24756202.8
(22) Date of filing: 07.02.2024
(51) Int. Cl.: H04W 74/08

(54) **METHOD FOR TRANSMITTING RANDOM ACCESS REPORT, AND COMMUNICATION APPARATUS**

(30) Priority: 16.02.2023 CN 202310152878
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN); CHEN, Jun, Shenzhen, Guangdong 518129 (CN); ZHANG, Hongzhuo, Shenzhen, Guangdong 518129 (CN)
(74) Representative: Thun, Clemens
(86) International application number: PCT/CN2024/076541
(87) International publication number: WO 2024/169829

(57) **Abstract**

This application provides a random access report transmission method and a communication apparatus. A terminal may record a random access report of a secondary base station (in other words, a secondary cell group) by using a container, and indicate, when sending the container to a primary base station, a primary secondary cell identifier corresponding to the container to the primary base station, so that the primary base station can forward the container to a corresponding secondary base station without parsing the container. One container may include one random access report, all random access reports that can be recorded by the terminal, or one or more random access reports of one primary secondary cell.

## Description

This application claims priority to Chinese Patent Application No. 202310152878.6, filed with the China National Intellectual Property Administration on February 16, 2023 and entitled "RANDOM ACCESS REPORT TRANSMISSION METHOD AND COMMUNICATION APPARATUS", which is incorporated herein by reference in its entirety.

### TECHNICAL FIELD

Embodiments of this application relate to the communication field, and more specifically, to a random access report transmission method and a communication apparatus.

### BACKGROUND

In dual-connectivity (dual-connectivity, DC), a terminal may communicate with a plurality of base stations, and on a network side, a communication service may be provided for the terminal by using resources of the plurality of base stations. In the DC, a base station that has control plane signaling exchange with a core network is referred to as a primary base station, and another base station is referred to as a secondary base station.

To avoid a random access failure caused by improper configuration of a base station, the terminal records some pieces of information in a random access process, and generates a corresponding random access report. After the terminal accesses the base station, the base station may obtain the random access report from the terminal, to identify a problem in the random access process, so that random access configuration is optimized in time, and a random access success rate of the terminal is improved.

In the DC, how to send, to the secondary base station, a random access report that is related to the secondary base station and that is recorded by the terminal becomes a problem to be resolved urgently.

### SUMMARY

This application provides a random access report transmission method and a communication apparatus, so that a random access report that is related to a secondary base station and that is recorded by a terminal can be sent to the secondary base station.

According to a first aspect, a random access report transmission method is provided. The method may be performed by a terminal or a module (for example, a circuit or a chip) in a terminal.

Specifically, the method includes: determining a first message, where the first message includes first information and N containers, each of the N containers includes a random access report, the first information indicates N primary secondary cell identifiers, the N primary secondary cell identifiers are in one-to-one correspondence with the N containers, and N is an integer greater than or equal to 1; and sending the first message to a primary base station.

Based on the foregoing method, a random access report recorded by the terminal can be sent to a corresponding secondary base station. In addition, an identifier that indicates a primary secondary cell corresponding to a container is included outside the container that includes a random access report, so that the primary base station can forward, without parsing content of the container, based on the primary secondary cell identifier corresponding to the container, the container to a secondary base station corresponding to the identifier. In addition, because the container corresponds to the primary secondary cell identifier, the primary base station simply needs to forward the container corresponding to the secondary base station to the secondary base station. This helps reduce signaling overheads between base stations. In addition, based on the foregoing method, an operation on a terminal side is simple.

In a possible implementation of the first aspect, the first information includes the N primary secondary cell identifiers.

In a possible implementation of the first aspect, the first information includes N first information elements that are arranged in sequence, the N first information elements include K information elements with a first special value and N-K primary secondary cell identifiers, a primary secondary cell identifier indicated by an information element with the first special value is a primary secondary cell identifier that is arranged before the information element with the first special value and that is closest to the information element with the first special value, and K is a positive integer less than N. In other words, for a primary secondary cell identifier that continuously appears, only one of the identifiers may be included, and the first special value indicates that a primary secondary cell identifier is the same as a previous primary secondary cell identifier. Based on this implementation, the signaling overheads are reduced.

When the foregoing method is applied to a scenario in which the primary base station and the secondary base station belong to different radio access technologies, the primary base station may be capable of directly communicating with the secondary base station corresponding to the container, or may be incapable of directly communicating with the secondary base station corresponding to the container. In a case in which the primary base station is incapable of directly communicating with the secondary base station corresponding to the container, the primary base station may fail to directly send a part of containers to a corresponding secondary base station.

For the foregoing case, in a possible implementation of the first aspect, the first information may further indicate a primary cell identifier corresponding to each of N primary secondary cells, so that the primary base station can send the container to the corresponding secondary base station via a primary base station corresponding to the container.

In a possible implementation of the first aspect, the first information further includes N primary cell identifiers, and the N primary cell identifiers are in one-to-one correspondence with the N primary secondary cell identifiers.

In a possible implementation of the first aspect, the first information further includes N second information elements that are arranged in sequence, the N second information elements include L information elements with a second special value and N-L primary cell identifiers, a primary cell identifier indicated by an information element with the second special value is a primary cell identifier that is arranged before the information element with the second special value and that is closest to the information element with the second special value, and L is a positive integer less than N. Based on this implementation, the signaling overheads are reduced.

In a possible implementation of the first aspect, a random access report in a container is a random access report generated after random access is initiated in a primary secondary cell corresponding to the container, or a random access report generated after random access is initiated in a secondary cell in a secondary cell group corresponding to a primary secondary cell corresponding to the container.

According to a second aspect, a random access report transmission method is provided. The method is a method that is on a base station side and that corresponds to the first aspect. For beneficial effects, refer to the first aspect or the implementations of the first aspect.

The method may be performed by a primary base station or a module (for example, a circuit or a chip) in a primary base station.

Specifically, the method includes: receiving a first message from a terminal, where the first message includes first information and N containers, each of the N containers includes a random access report, the first information indicates N primary secondary cell identifiers, the N primary secondary cell identifiers are in one-to-one correspondence with the N containers, and N is an integer greater than or equal to 1; determining, based on the first information, a first secondary base station corresponding to a random access report in a first container, where the first container is any one of the N containers; and forwarding the first container to the first secondary base station.

In a possible implementation of the second aspect, the first information includes the N primary secondary cell identifiers.

In a possible implementation of the second aspect, the first information includes N first information elements that are arranged in sequence, the N first information elements include K information elements with a first special value and N-K primary secondary cell identifiers, a primary secondary cell identifier indicated by an information element with the first special value is a primary secondary cell identifier that is arranged before the information element with the first special value and that is closest to the information element with the first special value, and K is a positive integer less than N.

In a possible implementation of the second aspect, the first information further indicates N primary cell identifiers corresponding to N primary secondary cells. In this case, when the primary base station is incapable of directly communicating with the first secondary base station, the method further includes: determining, based on the first information, a first primary base station corresponding to a first primary secondary cell. That the primary base station forwards the first container to the first secondary base station includes: The primary base station sends the first container and an identifier of the first primary secondary cell to the first primary base station, so that the first primary base station can obtain the identifier of the first primary secondary cell without parsing the first container, to determine the first secondary base station based on the identifier of the first primary secondary cell, and send the first container to the first secondary base station.

In a possible implementation of the second aspect, the first information further includes the N primary cell identifiers.

In a possible implementation of the second aspect, the first information further includes N second information elements that are arranged in sequence, the N second information elements include L information elements with a second special value and N-L primary cell identifiers, a primary cell identifier indicated by an information element with the second special value is a primary cell identifier that is arranged before the information element with the second special value and that is closest to the information element with the second special value, and L is a positive integer less than N.

In a possible implementation of the second aspect, a random access report in a container is a random access report generated after random access is initiated in a primary secondary cell corresponding to the container, or a random access report generated after random access is initiated in a secondary cell in a secondary cell group corresponding to a primary secondary cell corresponding to the container.

According to a third aspect, a random access report transmission method is provided. The method may be performed by a terminal or a module (for example, a circuit or a chip) in a terminal.

Specifically, the method includes: determining a first message, where the first message includes first information and a first container, the first container includes a plurality of random access reports, and the first information includes an identifier of a first primary secondary cell corresponding to the first container; and sending the first message to a primary base station.

Based on the foregoing method, a random access report recorded by the terminal can be sent to a corresponding secondary base station. In addition, an identifier that indicates a primary secondary cell corresponding to a container is included outside the container that includes a random access report, so that the primary base station can forward, without parsing content of the container, based on the primary secondary cell identifier corresponding to the container, the container to a secondary base station corresponding to the identifier. In addition, the primary base station simply needs to forward the container related to the secondary base station to the secondary base station. This helps reduce signaling overheads between base stations. In addition, based on the foregoing method, an operation on a network side is simple.

When the foregoing method is applied to a scenario in which the primary base station and the secondary base station belong to different radio access technologies, the primary base station may be capable of directly communicating with the secondary base station corresponding to the container, or may be incapable of directly communicating with the secondary base station corresponding to the container. In a case in which the primary base station is incapable of directly communicating with the secondary base station corresponding to the container, the primary base station may fail to directly send a part of containers to a corresponding secondary base station.

For the foregoing case, in a possible implementation of the third aspect, the first information further includes one or more primary cell identifiers corresponding to the first primary secondary cell, so that the primary base station can send the first container to a first secondary base station via a primary base station corresponding to the first container. When the first primary secondary cell corresponds to a plurality of primary cell identifiers, the plurality of primary cell identifiers corresponding to the first primary secondary cell are different from each other.

In a possible implementation of the third aspect, the first message further includes an identifier of a second primary secondary cell and a second container. The second container includes one or more random access reports, and the identifier of the second primary secondary cell corresponds to the second container. A random access report in the second container is a random access report generated after random access is initiated in a primary secondary cell corresponding to the second container, or a random access report generated after random access is initiated in a secondary cell in a secondary cell group corresponding to a primary secondary cell corresponding to the second container.

In a possible implementation of the third aspect, the first information further includes one or more primary cell identifiers corresponding to the second primary secondary cell, so that the primary base station can send the second container to a second secondary base station via a primary base station corresponding to the second container. When the second primary secondary cell corresponds to a plurality of primary cell identifiers, the plurality of primary cell identifiers corresponding to the second primary secondary cell are different from each other.

In a possible implementation of the third aspect, a random access report in the first container is a random access report generated after random access is initiated in a primary secondary cell corresponding to the first container, or a random access report generated after random access is initiated in a secondary cell in a secondary cell group corresponding to a primary secondary cell corresponding to the first container.

According to a fourth aspect, a random access report transmission method is provided. The method is a method that is on a base station side and that corresponds to the third aspect. For beneficial effects, refer to the third aspect or the implementations of the third aspect.

The method may be performed by a primary base station or a module (for example, a circuit or a chip) in a primary base station.

Specifically, the method includes: receiving a first message from a terminal, where the first message includes first information and a first container, the first container includes a plurality of random access reports, and the first information includes an identifier of a first primary secondary cell corresponding to the first container; determining, based on the first information, a first secondary base station corresponding to the first container; and sending the first container to the first secondary base station.

In a possible implementation of the fourth aspect, the first information further includes one or more primary cell identifiers corresponding to a first primary secondary cell. In this case, when the primary base station is incapable of directly communicating with the first secondary base station, the method further includes: determining, based on the first information, a first primary base station corresponding to the first primary secondary cell. That the primary base station forwards the first container to the first secondary base station includes: The primary base station sends the first container and the identifier of the first primary secondary cell to the first primary base station, so that the first primary base station can obtain the identifier of the first primary secondary cell without parsing the first container, to determine the first secondary base station based on the identifier of the first primary secondary cell, and send the first container to the first secondary base station.

When the first primary secondary cell corresponds to a plurality of primary cell identifiers, the plurality of primary cell identifiers corresponding to the first primary secondary cell are different from each other.

In a possible implementation of the fourth aspect, the first message further includes an identifier of a second primary secondary cell and a second container. The second container includes one or more random access reports, and the identifier of the second primary secondary cell corresponds to the second container. A random access report in the second container is a random access report generated after random access is initiated in a primary secondary cell corresponding to the second container, or a random access report generated after random access is initiated in a secondary cell in a secondary cell group corresponding to a primary secondary cell corresponding to the second container.

In a possible implementation of the fourth aspect, a random access report in the first container is a random access report generated after random access is initiated in a primary secondary cell corresponding to the first container, or a random access report generated after random access is initiated in a secondary cell in a secondary cell group corresponding to a primary secondary cell corresponding to the first container.

According to a fifth aspect, a random access report transmission method is provided. The method may be performed by a terminal or a module (for example, a circuit or a chip) in a terminal.

Specifically, the method includes: determining a first message, where the first message includes an identifier of a first primary secondary cell, an identifier of a second primary secondary cell, and a container, the container includes a random access report of the first primary secondary cell and a random access report of the second primary secondary cell, and the identifier of the first primary secondary cell is different from the identifier of the second primary secondary cell; and sending the first message to a primary base station.

Based on the foregoing method, a random access report recorded by the terminal can be sent to a corresponding secondary base station. In addition, identifiers that indicate a plurality of primary secondary cells corresponding to a container are included outside the container that includes random access reports, so that the primary base station forwards, without parsing content of the container, based on the plurality of primary secondary cell identifiers, the container to a plurality of secondary base stations corresponding to the plurality of primary secondary cell identifiers. In addition, in the foregoing method, only one of same primary secondary cell identifiers is included. This helps reduce air interface signaling overheads.

When the foregoing method is applied to a scenario in which the primary base station and the secondary base station belong to different radio access technologies, the primary base station may be capable of directly communicating with the secondary base station corresponding to the container, or may be incapable of directly communicating with the secondary base station corresponding to the container. In a case in which the primary base station is incapable of directly communicating with the secondary base station corresponding to the container, the primary base station may fail to directly send a part of containers to a corresponding secondary base station.

For the foregoing case, in a possible implementation of the fifth aspect, the first message further includes a primary cell identifier corresponding to the first primary secondary cell and a primary cell identifier corresponding to the second primary secondary cell, so that the primary base station can send the container to a first secondary base station via a first primary base station corresponding to the first primary secondary cell, and/or send the container to a second secondary base station via a second primary base station corresponding to the second primary secondary cell.

According to a sixth aspect, a random access report transmission method is provided. The method is a method that is on a base station side and that corresponds to the fifth aspect. For beneficial effects, refer to the fifth aspect or the implementations of the fifth aspect.

The method may be performed by a primary base station or a module (for example, a circuit or a chip) in a primary base station.

Specifically, the method includes: receiving a first message from a terminal, where the first message includes an identifier of a first primary secondary cell, an identifier of a second primary secondary cell, and a container, the container includes a random access report of the first primary secondary cell and a random access report of the second primary secondary cell, and the identifier of the first primary secondary cell is different from the identifier of the second primary secondary cell; determining a first secondary base station based on the identifier of the first primary secondary cell, and determining a second secondary base station based on the identifier of the second primary secondary cell; and forwarding the container to the first secondary base station and the second secondary base station.

In a possible implementation of the sixth aspect, the first message further includes a primary cell identifier corresponding to the first primary secondary cell and a primary cell identifier corresponding to the second primary secondary cell. In this case, when the primary base station is incapable of directly communicating with the first secondary base station, the method further includes: determining, based on the primary cell identifier corresponding to the first primary secondary cell, a first primary base station corresponding to the first primary secondary cell. That the primary base station forwards the container to the first secondary base station includes: The primary base station sends the container and the identifier of the first primary secondary cell to the first primary base station, so that the first primary base station can obtain the identifier of the first primary secondary cell without parsing the container, to determine the first secondary base station based on the identifier of the first primary secondary cell, and send the container to the first secondary base station. For a manner of sending the container to the second secondary base station, refer to the manner of sending the container to the first secondary base station. Details are not described again.

According to a seventh aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is the foregoing terminal or primary base station. When the apparatus is the terminal or the primary base station, the communication unit may be a transceiver, an input/output interface, or a communication interface; and the processing unit may be at least one processor. Optionally, the transceiver is a transceiver circuit. Optionally, the input/output interface is an input/output circuit.

In another implementation, the apparatus is a chip, a chip system, or a circuit used in the terminal or the primary base station. When the apparatus is the chip, the chip system, or the circuit used in the terminal or the primary base station, the communication unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

According to an eighth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a terminal or a primary base station.

In another implementation, the apparatus is a chip, a chip system, or a circuit used in the terminal or the primary base station.

According to a ninth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a tenth aspect, a processor is provided, configured to perform the method provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to an eleventh aspect, a computer-readable storage medium is provided. The computer-readable medium stores program code to be executed by a device, and the program code is used to perform the method provided in any one of the foregoing aspects or the implementations of the foregoing aspects.

According to a twelfth aspect, a computer program product including instructions is provided. When the computer program product runs on a computer, the computer is enabled to perform the method provided in any one of the foregoing aspects or the implementations of the foregoing aspects.

According to a thirteenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to a fourteenth aspect, a communication system is provided, including the foregoing terminal or primary base station.

According to a fifteenth aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 is a diagram of an architecture of a communication system 1000 to which an embodiment of this application is applied;
FIG. 2 is a diagram of an application scenario of DC;
FIG. 3 is a schematic flowchart of a random access report transmission method 300 according to an embodiment of this application;
FIG. 4 is a diagram of a first message;
FIG. 5 is another diagram of a first message;
FIG. 6 is another diagram of a first message;
FIG. 7 is another diagram of a first message;
FIG. 8 is a schematic flowchart of a random access report transmission method 800 according to an embodiment of this application;
FIG. 9 is another diagram of a first message;
FIG. 10 is another diagram of a first message;
FIG. 11 is a schematic flowchart of a random access report transmission method 1100 according to an embodiment of this application;
FIG. 12 is another diagram of a first message;
FIG. 13 is another diagram of a first message;
FIG. 14 is another diagram of a first message;
FIG. 15 is a diagram of a structure of a communication apparatus according to an embodiment of this application; and
FIG. 16 is a diagram of another structure of a communication apparatus according to an embodiment of this application.

### DESCRIPTION OF EMBODIMENTS

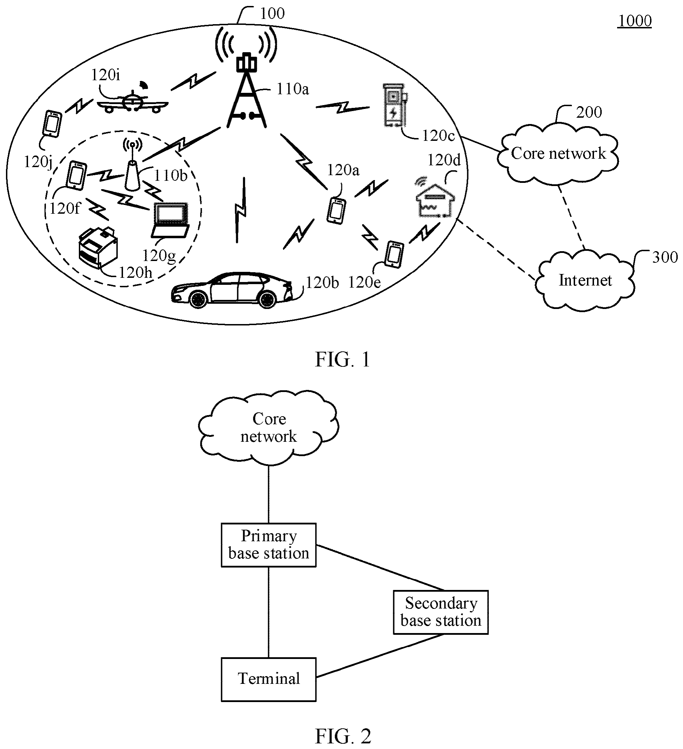

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, a function of the core network device and a logical function of the radio access network device may be integrated into a same physical device, or a part of functions of the core network device and a part of functions of the radio access network device may be integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, or the like; or may be a module or a unit that implements a part of functions of a base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement a function of a service data adaptation protocol (service data adaptation protocol, SDAP). The DU implements functions of a radio link control layer and a medium access control (medium access control, MAC) layer of the base station, and may further implement functions of a part or all of a physical layer. For specific descriptions of the foregoing protocol layers, refer to related technical specifications of the 3^{rd} generation partnership project (3^{rd} generation partnership project, 3GPP). The radio access network device may be a macro base station (for example, 110a in FIG. 1), may be a micro base station or an indoor base station (for example, 110b in FIG. 1), or may be a relay node, a donor node, or the like. A specific technology and a specific device form that are used by the radio access network device are not limited in embodiments of this application. For ease of description, an access network device is used as an abbreviation of the radio access network device, and the base station is used as an example of the radio access network device.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, where the deployment includes indoor or outdoor, or hand-held or vehicle-mounted; may be deployed on water; or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a wireless air interface protocol. It is clear that communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In DC, one terminal may communicate with a plurality of base stations, and a network side may provide a communication service for the terminal by using resources of the plurality of base stations. For example, FIG. 2 is a diagram of an application scenario of DC. As shown in FIG. 2, in the DC, a base station that has control plane signaling exchange with a core network is a primary base station, and another base station is a secondary base station. The primary base station may also be referred to as a master node (master node, MN), and the secondary base station may also be referred to as a secondary node (secondary node, SN).

A plurality of base stations in the DC may be base stations of a same radio access technology (radio access technology, RAT), for example, all are 4^{th} generation (4^{th} generation, 4G) base stations, or all are 5^{th} generation (5^{th} generation, 5G) base stations. A plurality of base stations in the DC may alternatively be base stations of different RATs, and this type of DC is referred to as multi-RAT dual connectivity (multi-RAT dual connectivity, MR-DC). For example, one base station is a 4G base station, and another base station is a 5G base station. A 4G RAT is also referred to as an evolved universal terrestrial radio access (evolved universal terrestrial radio access, E-UTRA) technology, and A 5G RAT is also referred to as an NR technology. MR-DC includes: DC between E-UTRA and NR (E-UTRA-NR DC, EN-DC), DC between E-UTRA and NR of NG-RAN (NG-RAN E-UTRA-NR DC, NGEN-DC), DC between NR and E-UTRA (NR-E-UTRA DC, NE-DC), and DC between NR and NR (NR-NR DC, NR-DC). In the EN-DC, a primary base station connected to a 4G core network is an LTE base station eNB, and a secondary base station is an NR base station gNB. In the NGEN-DC, a primary base station connected to a 5G core network (5G core, 5GC) is an LTE base station ng-eNB, and a secondary base station is the NR base station gNB. In the NE-DC, a primary base station connected to the 5GC is the NR base station gNB, and a secondary base station is the LTE base station ng-eNB. In the NR-DC, a primary base station connected to the 5GC is the NR base station gNB, and a secondary base station is the NR base station gNB.

In the DC, the secondary base station may directly send, to the terminal, a radio resource control (radio resource control, RRC) message generated by the secondary base station, and correspondingly, the terminal may also directly send an RRC message to the secondary base station. Alternatively, the secondary base station may notify the primary base station of an RRC message generated by the secondary base station, and then the primary base station sends the RRC message to the terminal, and correspondingly, the terminal may also send an RRC message to the secondary base station via the primary base station.

To avoid a random access (random access, RA) failure caused by improper configuration of the base station, the terminal records some pieces of information in a random access process and generates a corresponding random access report. The random access report mainly includes an identifier of a cell accessed through random access, an identifier of a special cell (special cell, SpCell) in a cell group in which the cell accessed through random access is located, frequency information of the random access cell, a random access cause, random access common information (RA-InformationCommon), and the like. After the terminal accesses the base station, the base station may obtain the random access report from the terminal, to identify a problem in the random access process, so that random access configuration is optimized in time, and a random access success rate of the terminal is improved.

If the terminal accesses an LTE cell through random access, the terminal records an LTE random access report and the terminal only records one LTE random access report. If the terminal accesses an NR cell through random access, the terminal records an NR random access report, and the terminal records an NR random access report list. A maximum quantity of random access reports in the NR random access report list may be preconfigured.

In the DC, how to send, to the secondary base station, a random access report that is related to the secondary base station and that is recorded by the terminal becomes a problem to be resolved urgently.

For the foregoing problem, this application provides a random access report transmission method and a communication apparatus, so that a random access report that is related to the secondary base station and that is recorded by the terminal can be sent to the secondary base station.

For ease of understanding, some terms in embodiments of this application are first described.

### 1. Primary cell, primary secondary cell, master cell group, primary secondary cell group, and secondary cell

In the DC, a primary base station has a primary cell (primary cell, PCell), and a secondary base station has a primary secondary cell (primary secondary cell, PSCell). The primary cell is a cell that is deployed at a dominant frequency and in which a terminal initiates an initial connection establishment process or a connection reestablishment process, or a cell indicated as a primary cell in a handover process. The primary secondary cell is a cell in which a terminal initiates a random access process on a secondary base station, a cell in which a terminal skips a random access process and initiates data transmission in a secondary base station change process, or a cell of a secondary base station in which a terminal initiates random access in a process of performing synchronous reconfiguration. The primary cell and the primary secondary cell may be collectively referred to as a SpCell.

Because the terminal served by one base station may receive services of a plurality of cells, a serving cell group provided by the primary base station for the terminal may also be referred to as a master cell group (master cell group, MCG), and similarly, a serving cell group provided by the secondary base station for the terminal is referred to as a secondary cell group (secondary cell group, SCG).

The MCG and the SCG each include at least one cell. When the MCG includes only one cell, the cell is the primary cell of the terminal. When the SCG includes only one cell, the cell is the primary secondary cell of the terminal. When there are a plurality of cells in the MCG or the SCG, a cell other than the SpCell may be referred to as a secondary cell (secondary cell, SCell).

### 2. Identifier of a cell

In embodiments of this application, an identifier of a cell may uniquely determine a cell. The identifier of the cell may include at least one of the following identifiers: a cell global identifier (cell global identifier, CGI), a combination of a physical cell identifier (physical cell identifier, PCI) and a frequency, a PCI, a cell identifier (cell identifier, cell ID), a non-public network identifier (non-public network identifier, NPN ID), a non-terrestrial network identifier (non-terrestrial network identifier, NTN ID), or another cell identifier. The CGI may include a public land mobile network identifier (public land mobile network identifier, PLMN ID) and the cell ID.

In embodiments of this application, a primary secondary cell identifier may be used to determine a secondary base station.

### 3. Random access report of a primary secondary cell

In embodiments of this application, a random access report of a primary secondary cell may be a random access report generated after random access is initiated in the primary secondary cell, or a random access report generated after random access is initiated in a secondary cell in a secondary cell group corresponding to the primary secondary cell. When the random access report is generated after random access is initiated in the primary secondary cell, or generated after random access is initiated in the secondary cell in the secondary cell group corresponding to the primary secondary cell, the random access report corresponds to the primary secondary cell.

It should be noted that, in this application, "transmission" includes "sending" and/or "receiving". For example, transmission of a random access report between a base station and a terminal includes both sending the random access report by the terminal to the base station, and receiving the random access report by the base station from the terminal. One container corresponds to one primary secondary cell identifier, and the primary secondary cell identifier corresponds to one secondary base station. For short, one container corresponds to one secondary base station. One container corresponds to one primary secondary cell identifier, the primary secondary cell identifier corresponds to one primary cell identifier, and one primary cell identifier corresponds to one primary base station. For short, one container corresponds to one primary base station.

The following describes a random access report transmission method provided in this application.

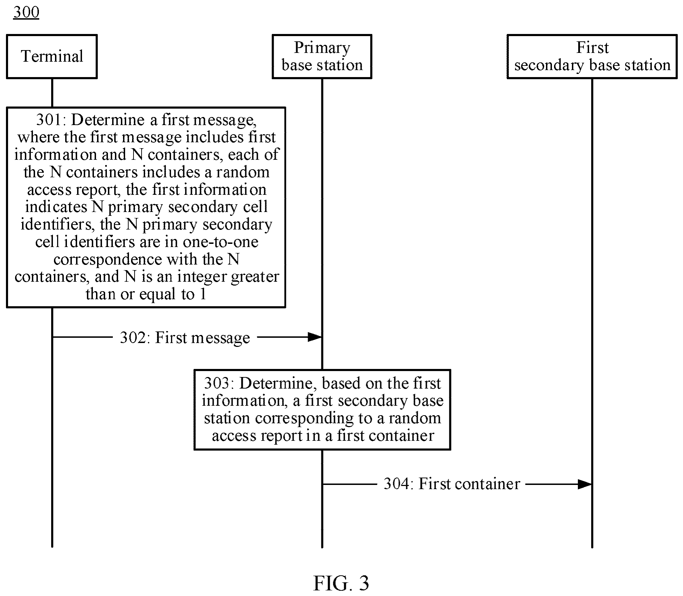

FIG. 3 is a schematic flowchart of a random access report transmission method 300 according to an embodiment of this application.

In the method 300, a terminal sends, to a primary base station by using N containers, N random access reports recorded by the terminal, and includes, outside the containers, identifiers that indicate primary secondary cells respectively corresponding to the N containers. In this way, the primary base station may forward, based on a primary secondary cell identifier corresponding to a container, the container to a secondary base station corresponding to the primary secondary cell identifier without parsing content of the container.

The method 300 may be performed by a terminal, a primary base station, and a secondary base station, or may be performed by a module or unit in a terminal, a module or unit in a primary base station, and a module or unit in a secondary base station. The following uses the terminal, the primary base station, and the secondary base station as an example for description. The method 300 may include at least a part of the following content.

Step 301: The terminal determines a first message.

The first message includes first information and the N containers. Each of the N containers includes a random access report. The first information indicates N primary secondary cell identifiers, the N primary secondary cell identifiers are in one-to-one correspondence with the N containers, and N is an integer greater than or equal to 1. The random access report in each container is a random access report generated after random access is initiated in a primary secondary cell corresponding to the container, or a random access report generated after random access is initiated in a secondary cell in a secondary cell group corresponding to a primary secondary cell corresponding to the container. A primary secondary cell identifier corresponding to each container is a primary secondary cell identifier corresponding to a random access report in the container.

For example, N may be a maximum quantity of random access reports that can be recorded and stored by the terminal. EN-DC or NGEN-DC is used as an example. The secondary base station is a gNB, the terminal records an NR random access report, and N may be 8. NE-DC is used as an example. The secondary base station is an ng-eNB, the terminal records an LTE random access report, and N may be 1.

In a possible implementation, that the terminal determines the first message includes: The terminal records a random access report of the secondary base station (or a secondary cell group) and the first information by using a container. Specifically, when the terminal adds, changes, or activates the secondary base station, when the terminal is in an uplink out-of-synchronization state during data transmission between the secondary base station and the terminal, or the like, the terminal initiates random access on the secondary base station, records the random access report in a manner in which one container corresponds to one random access report, and records information that indicates a primary secondary cell corresponding to the container, until a maximum quantity of random access reports that can be recorded by the terminal is reached. A cell in which the terminal initiates the random access may be a primary secondary cell of the secondary base station, or may be a secondary cell of the secondary base station. It may be understood that, in this application, when there is no logic conflict, the secondary base station and the secondary cell group may be interchangeable in descriptions.

There are many manners in which the first information indicates the N primary secondary cell identifiers, and the following manner 1 and manner 2 may be specifically included.

Manner 1: The first information includes the N primary secondary cell identifiers. In other words, the terminal may record a primary secondary cell identifier corresponding to each container one by one. For example, when storing a random access report by using a container, the terminal simultaneously records a primary secondary cell identifier corresponding to the container (in other words, the random access report).

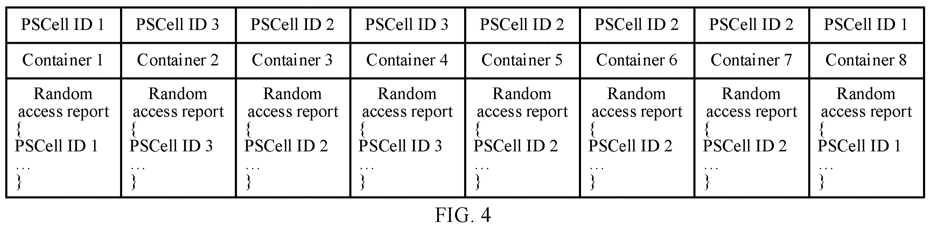

FIG. 4 is a diagram of a first message. As shown in FIG. 4, the first message includes a container 1 to a container 8 and eight primary secondary cell identifiers (namely, a PSCell ID 1, a PSCell ID 3, a PSCell ID 2, a PSCell ID 3, a PSCell ID 2, a PSCell ID 2, a PSCell ID 2, and a PSCell ID 1), the eight primary secondary cell identifiers are in one-to-one correspondence with the container 1 to the container 8, and each container includes a random access report.

Manner 2: The first information includes N first information elements that are arranged in sequence, the N first information elements include K information elements with a first special value and N-K primary secondary cell identifiers, a primary secondary cell identifier indicated by an information element with the first special value is a primary secondary cell identifier that is arranged before the information element with the first special value and that is closest to the information element with the first special value, and K is a positive integer less than N. In other words, for a primary secondary cell identifier that continuously appears, the terminal may record the identifier only once and uses the first special value to indicate that a primary secondary cell identifier is the same as a previous primary secondary cell identifier.

The first special value may be a default value, a null value, a bit value, or the like. This is not limited.

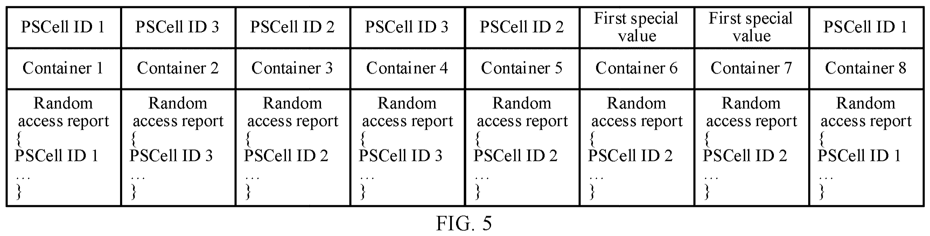

FIG. 5 is another diagram of a first message. As shown in FIG. 5, the first message includes a container 1 to a container 8, six primary secondary cell identifiers, and two first special values. The container 1 to the container 5 are in one-to-one correspondence with a PSCell ID 1, a PSCell ID 3, a PSCell ID 2, a PSCell ID 3, and a PSCell ID 2, the container 6 and the container 7 correspond to the two first special values, the container 8 corresponds to a PSCell ID 1, and each container includes a random access report. The first special values corresponding to the container 6 and the container 7 represent that the container 6 and the container 7 correspond to the PSCell ID 2.

When the method 300 is applied to a scenario (for example, EN-DC, NGEN-DC, or NE-DC) in which the primary base station and the secondary base station belong to different radio access technologies, the primary base station may be capable of directly communicating with the secondary base station corresponding to the container, or may be incapable of directly communicating with the secondary base station corresponding to the container. For example, there is no direct interface (for example, an X2 interface or an Xn interface) between the primary base station and the secondary base station. In a case in which the primary base station is incapable of directly communicating with the secondary base station corresponding to the container, the primary base station may fail to directly send the container to the corresponding secondary base station.

For the foregoing case, the first information may further indicate a primary cell identifier corresponding to each of N primary secondary cells, so that the primary base station can send the container to the corresponding secondary base station via a primary base station corresponding to the container.

For example, in the NGEN-DC, the NE-DC, and the EN-DC, when the primary base station is incapable of directly communicating with the secondary base station corresponding to the container, the primary base station may send the container to the corresponding secondary base station via the primary base station corresponding to the container.

There are many manners in which the first information indicates the primary cell identifier corresponding to each of the N primary secondary cells, and the following manner 3 and manner 4 may be specifically included.

Manner 3: The first information further includes the primary cell identifier corresponding to each of the N primary secondary cells.

For example, the first information includes N primary secondary cell identifiers and N primary cell identifiers, and the N primary secondary cell identifiers are in one-to-one correspondence with the N primary cell identifiers.

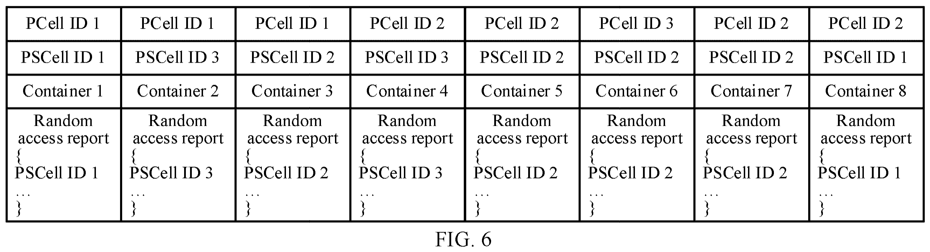

FIG. 6 is another diagram of a first message. As shown in FIG. 6, the first message includes a container 1 to a container 8, eight primary secondary cell identifiers (namely, a PSCell ID 1, a PSCell ID 3, a PSCell ID 2, a PSCell ID 3, a PSCell ID 2, a PSCell ID 2, a PSCell ID 2, and a PSCell ID 1), and eight primary cell identifiers (namely, a PCell ID 1, a PCell ID 1, a PCell ID 1, a PCell ID 2, a PCell ID 2, a PCell ID 3, a PCell ID 2, and a PCell ID 2). The eight containers are in one-to-one correspondence with the eight primary secondary cell identifiers, the eight primary secondary cell identifiers are in one-to-one correspondence with the eight primary cell identifiers, and each container includes a random access report.

Manner 4: The first information further includes N second information elements arranged in sequence, the N second information elements include L information elements with a second special value and N-L primary cell identifiers, a primary cell identifier indicated by an information element with the second special value is a primary cell identifier that is arranged before the information element with the second special value and that is closest to the information element with the second special value, and L is a positive integer less than N. In other words, for a primary cell identifier that continuously appears, the terminal may record the identifier only once and uses the second special value to indicate that a primary cell identifier is the same as a previous primary cell identifier.

The second special value may be a default value, a null value, a bit, or the like. This is not limited. The second special value may be the same as or different from the first special value.

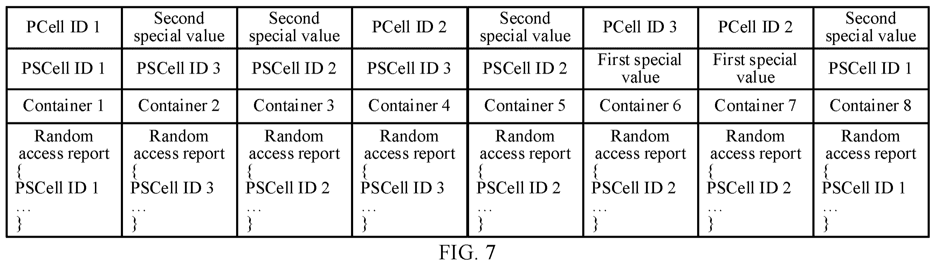

FIG. 7 is another diagram of a first message. As shown in FIG. 7, the first message includes a container 1 to a container 8, six primary secondary cell identifiers, two first special values, four primary cell identifiers, and four second special values. The container 1 to the container 3 are in one-to-one correspondence with a PSCell ID 1, a PSCell ID 3, and a PSCell ID 2, and the PSCell ID 1, the PSCell ID 3, and the PSCell ID 2 correspond to a PCell ID 1. The container 4 and the container 5 are in one-to-one correspondence with a PSCell ID 3 and a PSCell ID 2, and the PSCell ID 3 and the PSCell ID 2 correspond to a PCell ID 2. The container 6 corresponds to a PSCell ID 2, and the PSCell ID 2 corresponds to a PCell ID 3. The container 7 corresponds to a PSCell ID 2, and the PSCell ID 2 corresponds to a PCell ID 2. The container 8 corresponds to a PSCell ID 1, and the PSCell ID 1 corresponds to a PCell ID 2.

Step 302: The terminal sends the first message to the primary base station, and correspondingly, the primary base station receives the first message from the terminal.

Optionally, the first message may be an RRC message.

Step 303: The primary base station determines, based on the first information in the first message, a first secondary base station corresponding to a random access report in a first container. The first container is any one of the N containers.

In a possible implementation, when the first information indicates the N primary secondary cell identifiers, the primary base station determines that the first container in the N containers corresponds to an identifier of a first primary secondary cell in the N primary secondary cell identifiers, and determines the first secondary base station based on the identifier of the first primary secondary cell.

Optionally, when the first information indicates the N primary secondary cell identifiers and the primary cell identifier corresponding to each of the N primary secondary cells, the primary base station may further determine, based on the first information, a first primary base station corresponding to the first primary secondary cell.

Step 304: The primary base station forwards the first container to the first secondary base station, and correspondingly, the first secondary base station receives the first container from the primary base station.

When the primary base station is capable of directly communicating with the first secondary base station, the primary base station directly sends the first container to the first secondary base station.

When the primary base station is incapable of directly communicating with the first secondary base station, the primary base station may forward the first container to the first secondary base station via the first primary base station. Specifically, the primary base station sends the first container and the identifier of the first primary secondary cell to the first primary base station, so that the first primary base station can obtain the identifier of the first primary secondary cell without parsing the first container, to determine the first secondary base station based on the identifier of the first primary secondary cell, and send the first container to the first secondary base station.

It should be noted that, a part of the N primary secondary cell identifiers may be the same. For containers corresponding to the same primary secondary cell identifiers, the primary base station may send the containers to a corresponding secondary base station through one message, or may send the containers to a corresponding secondary base station through a plurality of messages. This is not limited.

It should be further noted that, the foregoing uses only the random access report as an example, and the method 300 is also applicable to another report that needs to be forwarded by the primary base station.

Based on the method 300, a random access report recorded by the terminal can be sent to a corresponding secondary base station. In addition, an identifier that indicates a primary secondary cell corresponding to a container is included outside the container including a random access report, so that the primary base station may forward the container to the corresponding secondary base station without parsing the container. In addition, in the method 300, the primary base station simply needs to forward the container related to the secondary base station to the secondary base station. This helps reduce signaling overheads between base stations. Moreover, in the method 300, an operation on a terminal side is simple.

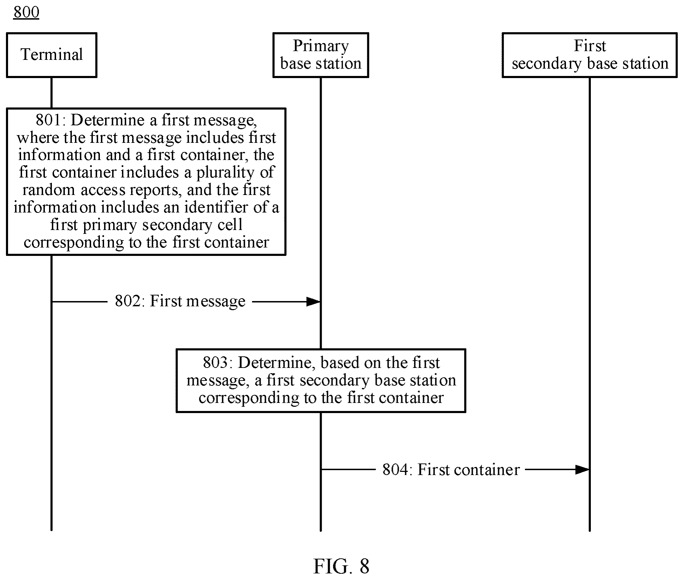

FIG. 8 is a schematic flowchart of a random access report transmission method 800 according to an embodiment of this application.

Different from the method 300, in the method 800, one or more random access reports of a same primary secondary cell are recorded by using one container, and an identifier that indicates a primary secondary cell corresponding to the container is included outside the container, so that a primary base station can forward, without parsing content of the container, based on the primary secondary cell identifier corresponding to the container, the container to a secondary base station corresponding to the primary secondary cell identifier.

The method 800 may be performed by a terminal, a primary base station, and a secondary base station, or may be performed by a module or unit in a terminal, a module or unit in a primary base station, and a module or unit in a secondary base station. The following uses the terminal, the primary base station, and the secondary base station as an example for description. The method 800 may include at least a part of the following content.

Step 801: The terminal determines a first message.

The first message includes first information and a first container. The first container includes a plurality of random access reports, and the first information includes an identifier of a first primary secondary cell corresponding to the first container. The plurality of random access reports in the first container are random access reports generated after random access is initiated in the first primary secondary cell or random access reports generated after random access is initiated in a secondary cell in a secondary cell group corresponding to the first primary secondary cell.

The plurality of random access reports included in the first container may be random access reports generated when the first primary secondary cell or the secondary cell in the secondary cell group corresponding to the first primary secondary cell is accessed through random access for a plurality of times in a non-consecutive manner, or may be random access reports generated when the first primary secondary cell or the secondary cell in the secondary cell group corresponding to the first primary secondary cell is accessed through random access for a plurality of times in a consecutive manner.

In a possible implementation, that the terminal determines the first message includes: The terminal records a random access report of the secondary base station and first information by using a container. Specifically, when the terminal adds, changes, or activates the secondary base station, when the terminal is in an uplink out-of-synchronization state during data transmission between the secondary base station and the terminal, or the like, the terminal initiates random access on the secondary base station, records random access reports in a manner in which one container corresponds to one or more random access reports of a same primary secondary cell, and records a primary secondary cell identifier corresponding to the container until a maximum quantity of random access reports that can be recorded by the terminal is reached. A cell in which the terminal initiates the random access may be a primary secondary cell of the secondary base station, or may be a secondary cell of the secondary base station.

Optionally, the first message further includes an identifier of a second primary secondary cell and a second container. The second container includes one or more random access reports, and the identifier of the second primary secondary cell corresponds to the second container. The one or more random access reports in the second container are random access reports generated after random access is initiated in the second primary secondary cell or random access reports generated after random access is initiated in a secondary cell in a secondary cell group corresponding to the second primary secondary cell. In other words, if the terminal initiates random access to a plurality of secondary cell groups, the first message includes a plurality of containers, and each container corresponds to one primary secondary cell.

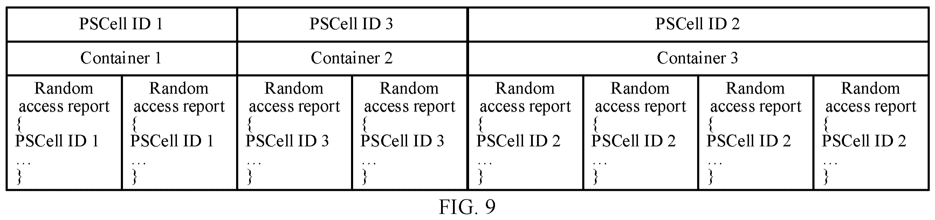

FIG. 9 is another diagram of a first message. As shown in FIG. 9, the first message includes a container 1 to a container 3 and three primary secondary cell identifiers (namely, a PSCell ID 1, a PSCell ID 3, and a PSCell ID 2). The three primary secondary cell identifiers are in one-to-one correspondence with the container 1 to the container 3. The container 1 includes two random access reports of a primary secondary cell 1, the container 2 includes two random access reports of a primary secondary cell 3, and the container 3 includes four random access reports of a primary secondary cell 2.

When the method 800 is applied to a scenario (for example, EN-DC, NGEN-DC, or NE-DC) in which the primary base station and the secondary base station belong to different radio access technologies, the primary base station may be capable of directly communicating with the secondary base station corresponding to the container, or may be incapable of directly communicating with the secondary base station corresponding to the container. For example, there is no direct interface (for example, an X2 interface or an Xn interface) between the primary base station and the secondary base station. In a case in which the primary base station is incapable of directly communicating with the secondary base station corresponding to the container, the primary base station may fail to directly send a part of containers to a corresponding secondary base station.

For the foregoing case, the first information may further include one or more primary cell identifiers corresponding to the first primary secondary cell, and when the first primary secondary cell corresponds to a plurality of primary cell identifiers, the plurality of primary cell identifiers are different from each other. When the first message further includes the identifier of the second primary secondary cell and the second container, the first information may further include one or more primary cell identifiers corresponding to the second primary secondary cell, and when the second primary secondary cell corresponds to a plurality of primary cell identifiers, the plurality of primary cell identifiers are different from each other. In this way, the primary base station can send a container to a corresponding secondary base station via a primary base station corresponding to the container.

For example, in the NGEN-DC, the NE-DC, and the EN-DC, when the primary base station is incapable of directly communicating with the secondary base station corresponding to the container, the primary base station may send the container to the corresponding secondary base station via the primary base station corresponding to the container.

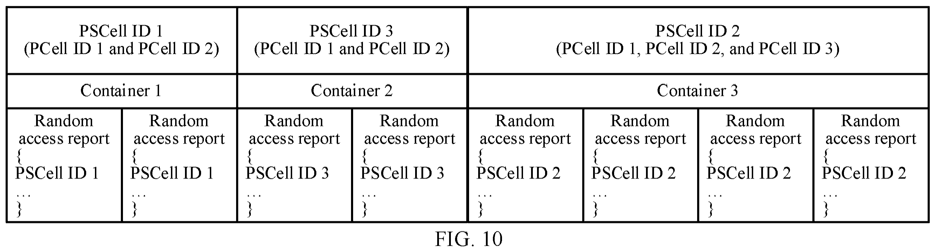

FIG. 10 is another diagram of a first message. As shown in FIG. 10, the first message includes a container 1 to a container 3, three primary secondary cell identifiers (namely, a PSCell ID 1, a PSCell ID 3, and a PSCell ID 2), and a primary cell identifier corresponding to each primary secondary cell. The three primary secondary cell identifiers are in one-to-one correspondence with the container 1 to the container 3. The container 1 includes two random access reports of a primary secondary cell 1. The container 2 includes two random access reports of a primary secondary cell 3. The container 2 includes four random access reports of a primary secondary cell 2. The PSCell ID 1 corresponds to two primary cell identifiers (namely, a PCell ID 1 and a PCell ID 2). The PSCell ID 2 corresponds to three primary cell identifiers (namely, a PCell ID 1, a PCell ID 2, and a PCell ID 3). The PSCell ID 3 corresponds to two primary cell identifiers (namely, a PCell ID 1 and a PCell ID 2).

Step 802: The terminal sends the first message to the primary base station, and correspondingly, the primary base station receives the first message from the terminal.

Optionally, the first message may be an RRC message.

Step 803: The primary base station determines, based on the first information in the first message, a first secondary base station corresponding to the first container.

In a possible implementation, the primary base station determines that the first container corresponds to the identifier of the first primary secondary cell, and determines the first secondary base station based on the identifier of the first primary secondary cell.

Optionally, when the first information further includes one or more primary cell identifiers corresponding to the first primary secondary cell, the primary base station may further determine, based on the first information, a first primary base station corresponding to the first primary secondary cell.

For example, when the first primary secondary cell corresponds to a plurality of primary cell identifiers, the first primary base station may be any one of a plurality of primary base stations corresponding to the plurality of primary cell identifiers, or the first primary base station may be determined by the primary base station based on network implementation.

Optionally, when the first message further includes the identifier of the second primary secondary cell and the second container, the primary base station may further determine, based on the first information in the first message, a second secondary base station corresponding to the second container.

Optionally, when the first information further includes one or more primary cell identifiers corresponding to the second primary secondary cell, the primary base station may further determine, based on the first information, a second primary base station corresponding to the second primary secondary cell.

For example, when the second primary secondary cell corresponds to a plurality of primary cell identifiers, the second primary base station may be any one of a plurality of primary base stations corresponding to the plurality of primary cell identifiers, or the second primary base station may be determined by the primary base station based on network implementation.

Step 804: The primary base station forwards the first container to the first secondary base station, and correspondingly, the first secondary base station receives the first container from the primary base station.

When the primary base station is capable of directly communicating with the first secondary base station, the primary base station directly sends the first container to the first secondary base station.

When the primary base station is incapable of directly communicating with the first secondary base station, the primary base station may forward the first container to the first secondary base station via the first primary base station. Specifically, the primary base station sends the first container and the identifier of the first primary secondary cell to the first primary base station, so that the first primary base station can obtain the identifier of the first primary secondary cell without parsing the first container, to determine the first secondary base station based on the identifier of the first primary secondary cell, and send the first container to the first secondary base station.

Optionally, the primary base station further forwards the second container to the second secondary base station, and correspondingly, the second primary base station receives the second container from the primary base station.

When the primary base station is capable of directly communicating with the second secondary base station, the primary base station directly sends the second container to the second secondary base station.

When the primary base station is incapable of directly communicating with the second secondary base station, the primary base station may forward the second container to the second secondary base station via the second primary base station corresponding to the second secondary base station. Specifically, the primary base station sends the second container and the identifier of the second primary secondary cell to the second primary base station, so that the second primary base station can obtain the identifier of the second primary secondary cell without parsing the second container, to determine the second secondary base station based on the identifier of the second primary secondary cell, and send the second container to the second secondary base station.

It should be noted that, the foregoing uses only the random access report as an example, and the method 800 is also applicable to another report that needs to be forwarded by the primary base station.

Based on the method 800, a random access report recorded by the terminal can be sent to a corresponding secondary base station. In addition, an identifier that indicates a primary secondary cell corresponding to a container is included outside the container including a random access report, so that the primary base station may forward the container to the corresponding secondary base station without parsing the container. In addition, in the method 800, the primary base station simply needs to forward the container related to the secondary base station to the secondary base station. This helps reduce signaling overheads between base stations. Moreover, in the method 800, an operation on a network side is simple.

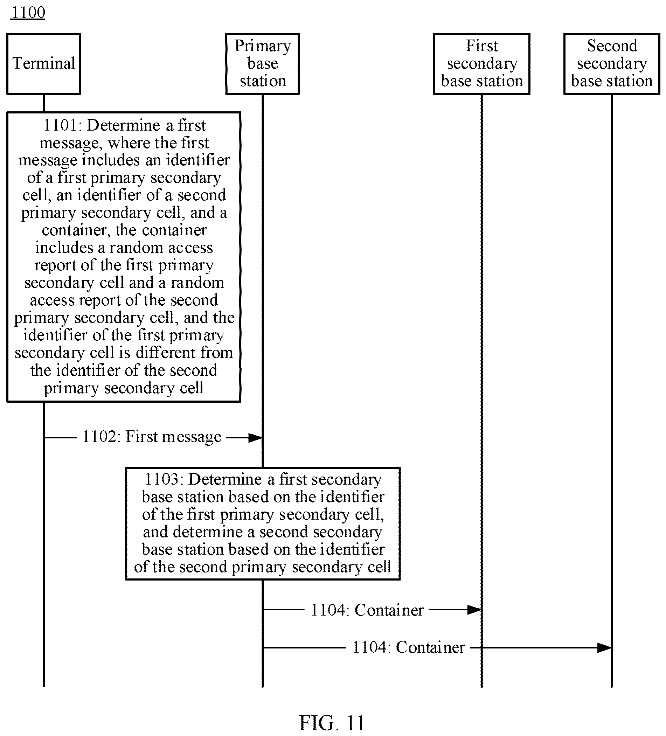

FIG. 11 is a schematic flowchart of a random access report transmission method 1100 according to an embodiment of this application.

Different from the method 300 and the method 800, in the method 1100, random access reports of a plurality of different primary secondary cells are recorded by using one container, and a plurality of primary secondary cell identifiers are included outside the container, so that a primary base station can forward, without parsing content of the container, based on the plurality of primary secondary cell identifiers, the container to a plurality of secondary base stations corresponding to the plurality of primary secondary cell identifiers.

The method 1100 may be performed by a terminal, a primary base station, and a secondary base station, or may be performed by a module or unit in a terminal, a module or unit in a primary base station, and a module or unit in a secondary base station. The following uses the terminal, the primary base station, and the secondary base station as an example for description. The method 1100 may include at least a part of the following content.

Step 1101: The terminal determines a first message.

The first message includes an identifier of a first primary secondary cell, an identifier of a second primary secondary cell, and a container, the container includes a random access report of the first primary secondary cell and a random access report of the second primary secondary cell, and the identifier of the first primary secondary cell is different from the identifier of the second primary secondary cell.

In a possible implementation, that the terminal determines the first message includes: The terminal records, in a container, the random access report of the first primary secondary cell, the identifier of the first primary secondary cell, the random access report of the second primary secondary cell, and the identifier of the second primary secondary cell. Specifically, when the terminal adds, changes, or activates the secondary base station, or when the terminal is in an uplink out-of-synchronization state during data transmission between the secondary base station and the terminal, the terminal initiates random access on the secondary base station, records random access reports of different primary secondary cells by using one container, and records identifiers of the different primary secondary cell until a maximum quantity of random access reports that can be recorded by the terminal is reached. A cell in which the terminal initiates the random access may be a primary secondary cell of the secondary base station, or may be a secondary cell of the secondary base station.

For different primary secondary cell identifiers, the terminal performs recording only once. In this way, signaling overheads of the first message are low.

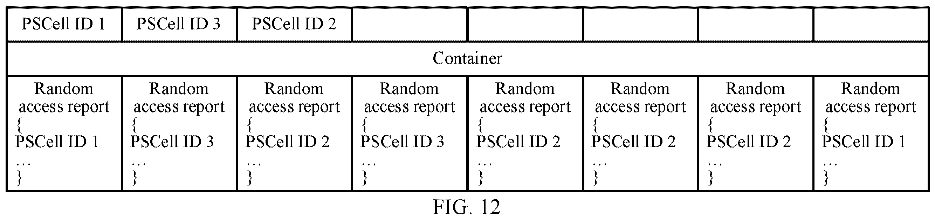

FIG. 12 is another diagram of a first message. As shown in FIG. 12, the first message includes a container and three primary secondary cell identifiers (namely, a PSCell ID 1, a PSCell ID 3, and a PSCell ID 2). The container includes eight random access reports, and the eight random access reports correspond to the three primary secondary cell identifiers.

When the method 1100 is applied to a scenario (for example, EN-DC, NGEN-DC, or NE-DC) in which the primary base station and the secondary base station belong to different radio access technologies, the primary base station may be capable of directly communicating with the secondary base station corresponding to the container, or may be incapable of directly communicating with the secondary base station corresponding to the container. For example, there is no direct interface (for example, an X2 interface or an Xn interface) between the primary base station and the secondary base station. In a case in which the primary base station is incapable of directly communicating with the secondary base station corresponding to the container, the primary base station may fail to directly send a part of containers to a corresponding secondary base station.

For the foregoing case, the first message includes a primary cell identifier corresponding to the first primary secondary cell and a primary cell identifier corresponding to the second primary secondary cell. There may be one or more primary cell identifiers corresponding to the first primary secondary cell, and when the first primary secondary cell corresponds to a plurality of primary cell identifiers, the plurality of primary cell identifiers are different from each other. There may also be one or more primary cell identifiers corresponding to the second primary secondary cell, and when the second primary secondary cell corresponds to a plurality of primary cell identifiers, the plurality of primary cell identifiers are different from each other. In this way, the primary base station can send a container to a corresponding secondary base station via a primary base station corresponding to the container.

For example, in the NGEN-DC, the NE-DC, and the EN-DC, when the primary base station is incapable of directly communicating with the secondary base station corresponding to the container, the primary base station may send the container to the corresponding secondary base station via the primary base station corresponding to the container.

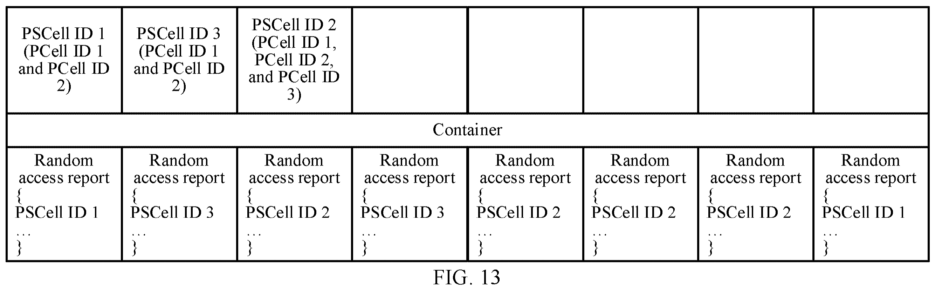

FIG. 13 is another diagram of a first message. As shown in FIG. 13, the first message includes a container, three primary secondary cell identifiers (namely, a PSCell ID 1, a PSCell ID 3, and a PSCell ID 2), and a primary cell identifier corresponding to each primary secondary cell. The container includes a total of eight random access reports of a primary secondary cell 1, a primary secondary cell 2, and a primary secondary cell 3. The PSCell ID 1 corresponds to two primary cell identifiers (namely, a PCell ID 1 and a PCell ID 2). The PSCell ID 2 corresponds to three primary cell identifiers (namely, a PCell ID 1, a PCell ID 2, and a PCell ID 3). The PSCell ID 3 corresponds to two primary cell identifiers (namely, a PCell ID 1 and a PCell ID 2).

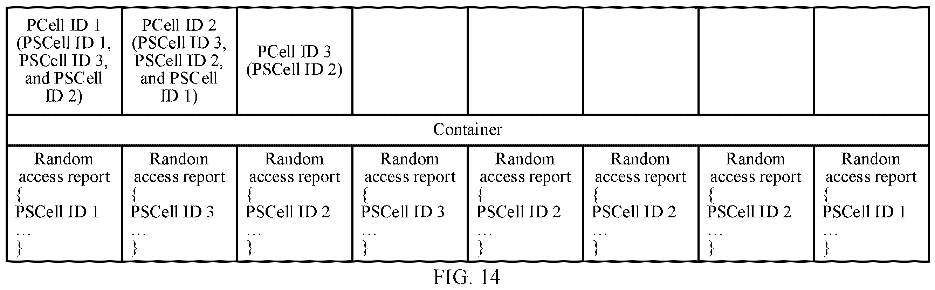

FIG. 14 is another diagram of a first message. As shown in FIG. 14, the first message includes a container, three primary cell identifiers (namely, a PCell ID 1, a PCell ID 3, and a PCell ID 2), and a primary secondary cell identifier corresponding to each primary cell. The container includes a total of eight random access reports of a primary secondary cell 1, a primary secondary cell 2, and a primary secondary cell 3. The PCell ID 1 corresponds to three primary secondary cell identifiers (namely, a PSCell ID 1, a PSCell ID 3, and a PSCell ID 2). The PCell ID 2 corresponds to three primary secondary cell identifiers (namely, a PSCell ID 3, a PSCell ID 2, and a PSCell ID 1). The PCell ID 3 corresponds to one primary secondary cell identifier (namely, a PSCell ID 2).

Step 1102: The terminal sends the first message to the primary base station, and correspondingly, the primary base station receives the first message from the terminal.

Optionally, the first message may be an RRC message.

Step 1103: The primary base station determines a first secondary base station based on the identifier of the first primary secondary cell in the first message, and determines a second secondary base station based on the identifier of the second primary secondary cell in the first message.

Optionally, when the first message further includes the primary cell identifier corresponding to the first primary secondary cell and the primary cell identifier corresponding to the second primary secondary cell, the primary base station further determines a first primary base station corresponding to the first primary secondary cell and a second primary base station corresponding to the second primary secondary cell.

For example, when the first primary secondary cell corresponds to a plurality of primary cell identifiers, the first primary base station may be any one of a plurality of primary base stations corresponding to the plurality of primary cell identifiers, or the first primary base station may be determined by the primary base station based on network implementation. When the second primary secondary cell corresponds to a plurality of primary cell identifiers, the second primary base station may be any one of a plurality of primary base stations corresponding to the plurality of primary cell identifiers, or the second primary base station may be determined by the primary base station based on network implementation.

Step 1104: The primary base station forwards the container to the first secondary base station and the second secondary base station, and correspondingly, the first secondary base station and the second secondary base station receive the container from the primary base station.

When the primary base station is capable of directly communicating with the first secondary base station, the primary base station directly forwards the container to the first secondary base station.

When the primary base station is incapable of directly communicating with the first secondary base station, the primary base station may forward the container to the first secondary base station via the first primary base station. Specifically, the primary base station sends the container and the identifier of the first primary secondary cell to the first primary base station, so that the first primary base station can obtain the identifier of the first primary secondary cell without parsing the container, to determine the first secondary base station based on the identifier of the first primary secondary cell, and send the container to the first secondary base station.

When the primary base station is capable of directly communicating with the second secondary base station, the primary base station directly forwards the second container to the second secondary base station.

When the primary base station is incapable of directly communicating with the second secondary base station, the primary base station may forward the container to the second secondary base station via the second primary base station. Specifically, the primary base station sends the container and the identifier of the second primary secondary cell to the second primary base station, so that the second primary base station can obtain the identifier of the second primary secondary cell without parsing the container, to determine the second secondary base station based on the identifier of the second primary secondary cell, and send the container to the second secondary base station.

It should be noted that, the foregoing uses only the random access report as an example, and the method 1100 is also applicable to another report that needs to be forwarded by the primary base station.

Based on the method 1100, a random access report recorded by the terminal can be sent to a corresponding secondary base station. In addition, an identifier that indicates a primary secondary cell corresponding to a container is included outside the container including a random access report, so that the primary base station may forward the container to the corresponding secondary base station without parsing the container. In addition, in the method 1100, identifiers of a same primary secondary cell are recorded only once. This helps reduce air interface signaling overheads.

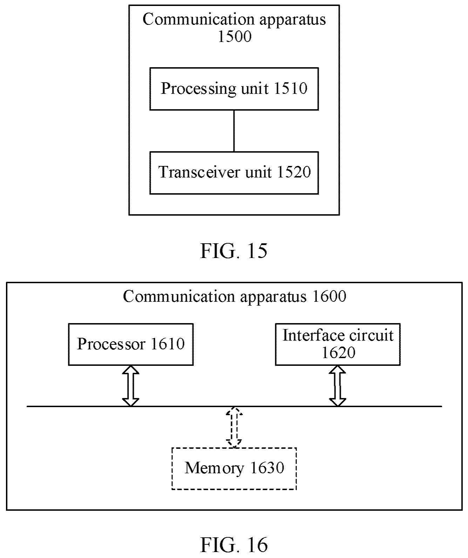

The foregoing describes method embodiments of this application with reference to FIG. 3 to FIG. 14, and the following describes apparatus embodiments of this application with reference to FIG. 15 and FIG. 16. It may be understood that, to implement functions in the foregoing embodiments, a base station and a terminal include corresponding hardware structures and/or software modules for performing various functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

FIG. 15 and FIG. 16 are diagrams of structures of possible communication apparatuses according to embodiments of this application. These communication apparatuses may be configured to implement a function of the terminal or the base station in the foregoing method embodiments, and therefore can also achieve beneficial effects of the foregoing method embodiments. In this embodiment of this application, the communication apparatus may be one of the terminals 120a to 120j shown in FIG. 1, may be the base station 110a or 110b shown in FIG. 1, or may be a module (for example, a chip) used in the terminal or the base station.

As shown in FIG. 15, a communication apparatus 1500 includes a processing unit 1510 and a transceiver unit 1520. The communication apparatus 1500 is configured to implement a function of the terminal or the base station in the method embodiment shown in FIG. 3, FIG. 8, or FIG. 11.

When the communication apparatus 1500 is configured to implement a function of the terminal in the method embodiment shown in FIG. 3, the processing unit 1510 is configured to determine a first message, where the first message includes first information and N containers, each of the N containers includes a random access report, the first information indicates N primary secondary cell identifiers, the N primary secondary cell identifiers are in one-to-one correspondence with the N containers, and N is an integer greater than or equal to 1; and the transceiver unit 1520 is configured to send the first message to a primary base station.

When the communication apparatus 1500 is configured to implement a function of the base station (for example, a primary base station) in the method embodiment shown in FIG. 3, the transceiver unit 1520 is configured to receive a first message from a terminal, where the first message includes first information and N containers, each of the N containers includes a random access report, the first information indicates N primary secondary cell identifiers, the N primary secondary cell identifiers are in one-to-one correspondence with the N containers, and N is an integer greater than or equal to 1; the processing unit 1510 is configured to determine, based on the first information, a first secondary base station corresponding to a random access report in a first container, where the first container is any one of the N containers; and the transceiver unit 1520 is further configured to forward the first container to the first secondary base station.

When the communication apparatus 1500 is configured to implement a function of the terminal in the method embodiment shown in FIG. 8, the processing unit 1510 is configured to determine a first message, where the first message includes first information and a first container, the first container includes a plurality of random access reports, and the first information includes an identifier of a first primary secondary cell corresponding to the first container; and the transceiver unit 1520 is configured to send the first message to a primary base station.

When the communication apparatus 1500 is configured to implement a function of the base station (for example, a primary base station) in the method embodiment shown in FIG. 8, the transceiver unit 1520 is configured to receive a first message from a terminal, where the first message includes first information and a first container, the first container includes a plurality of random access reports, and the first information includes an identifier of a first primary secondary cell corresponding to the first container; the processing unit 1510 is configured to determine, based on the first information, a first secondary base station corresponding to the first container; and the transceiver unit 1520 is further configured to forward the first container to the first secondary base station.

When the communication apparatus 1500 is configured to implement a function of the terminal in the method embodiment shown in FIG. 11, the processing unit 1510 is configured to determine a first message, where the first message includes an identifier of a first primary secondary cell, an identifier of a second primary secondary cell, and a container, the container includes a random access report of the first primary secondary cell and a random access report of the second primary secondary cell, and the identifier of the first primary secondary cell is different from the identifier of the second primary secondary cell; and the transceiver unit 1520 is configured to send the first message to a primary base station.

When the communication apparatus 1500 is configured to implement a function of the base station (for example, a primary base station) in the method embodiment shown in FIG. 11, the transceiver unit 1520 is configured to receive a first message from a terminal, where the first message includes an identifier of a first primary secondary cell, an identifier of a second primary secondary cell, and a container, the container includes a random access report of the first primary secondary cell and a random access report of the second primary secondary cell, and the identifier of the first primary secondary cell is different from the identifier of the second primary secondary cell; the processing unit 1510 is configured to: determine a first secondary base station based on the identifier of the first primary secondary cell, and determine a second secondary base station based on the identifier of the second primary secondary cell; and the transceiver unit 1520 is further configured to send the container to the first secondary base station and the second secondary base station.

For more detailed descriptions of the processing unit 1510 and the transceiver unit 1520, refer to related descriptions in the method embodiments shown in FIG. 3, FIG. 8, or FIG. 11.

As shown in FIG. 16, a communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to: store instructions executed by the processor 1610, store input data needed by the processor 1610 to run the instructions, or store data generated after the processor 1610 runs the instructions.

When the communication apparatus 1600 is configured to implement the method shown in FIG. 3, FIG. 8, or FIG. 11, the processor 1610 is configured to implement the function of the processing unit 1510, and the interface circuit 1620 is configured to implement the function of the transceiver unit 1520.

When the communication apparatus is a chip used in a terminal, the chip in the terminal implements a function of the terminal in the foregoing method embodiments. The chip in the terminal receives, via another module (for example, a radio frequency module or an antenna) in the terminal, information sent by a base station to the terminal. Alternatively, the chip in the terminal sends information to another module (for example, a radio frequency module or an antenna) in the terminal. The information is sent by the terminal to a base station.

When the communication apparatus is a module used in a base station, the module in the base station implements a function of the base station in the foregoing method embodiment. The module in the base station receives information from another module (for example, a radio frequency module or an antenna) in the base station. The information is sent by a terminal to the base station. Alternatively, the module in the base station sends information to another module (for example, a radio frequency module or an antenna) in the base station. The information is sent by the base station to a terminal. The module in the base station herein may be a baseband chip of the base station, may be a CU, a DU, or another module, or may be an apparatus in an open radio access network (open radio access network, O-RAN) architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or terminal as discrete components.

All or a part of the foregoing embodiments may be implemented by software, hardware, firmware, or any combination thereof. When the software is used for the implementation, all or a part of the embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, terms and/or descriptions in different embodiments are consistent and may be referenced by each other unless otherwise specified or a logical conflict occurs. Technical features in different embodiments may be combined to form a new embodiment according to an internal logical relationship thereof. For example, an indication manner of the first information in the method 300 may be combined with the method 1100, and for another example, a recording manner of the primary secondary cell identifier and/or the primary cell identifier in the method 1100 may be combined with the method 300.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C. "Indicating" or "indicate" may include direct indicating and indirect indicating, or "indicating" or "indicate" may be explicitly and/or implicitly indicating. For example, when a piece of information is described as indicating information I, the indication information may directly indicate I or indirectly indicate I, but it does not necessarily mean that the information includes I. The term "include" means "include but not limited to", unless otherwise specifically emphasized.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A random access report transmission method, performed by a terminal or a module in a terminal, wherein the method comprises:
determining a first message, wherein the first message comprises an identifier of a first primary secondary cell of the terminal, an identifier of a second primary secondary cell of the terminal, and a container, the container comprises a random access report of the first primary secondary cell and a random access report of the second primary secondary cell, and the identifier of the first primary secondary cell is different from the identifier of the second primary secondary cell; and
sending the first message to a primary base station of the terminal.

2. The method according to claim 1, wherein the container further comprises the identifier of the first primary secondary cell and the identifier of the second primary secondary cell.

3. The method according to claim 1 or 2, wherein the random access report of the first primary secondary cell comprises a random access report of a first secondary cell, and the first secondary cell is a secondary cell in a secondary cell group corresponding to the first primary secondary cell.

4. A random access report transmission method, performed by a primary base station of a terminal or a module in a primary base station of a terminal, wherein the method comprises:
receiving a first message from the terminal, wherein the first message comprises an identifier of a first primary secondary cell of the terminal, an identifier of a second primary secondary cell of the terminal, and a container, the container comprises a random access report of the first primary secondary cell and a random access report of the second primary secondary cell, and the identifier of the first primary secondary cell is different from the identifier of the second primary secondary cell;
determining a first secondary base station based on the identifier of the first primary secondary cell;
determining a second secondary base station based on the identifier of the second primary secondary cell; and
sending the container to the first secondary base station and the second secondary base station.

5. The method according to claim 4, wherein the container further comprises the identifier of the first primary secondary cell and the identifier of the second primary secondary cell.

6. The method according to claim 4 or 5, wherein the random access report of the first primary secondary cell comprises a random access report of a first secondary cell, and the first secondary cell is a secondary cell in a secondary cell group corresponding to the first primary secondary cell.

7. The method according to any one of claims 4 to 6, wherein when the primary base station is incapable of directly communicating with the first secondary base station, sending the container to the first secondary base station specifically comprises:
sending the container to a first primary base station corresponding to the first primary secondary cell, wherein the first primary base station is capable of directly communicating with the first secondary base station.

8. A random access report transmission method, performed by a first secondary base station of a terminal or a module in a first secondary base station of a terminal, wherein the method comprises:
receiving a container from a primary base station of the terminal, wherein the container comprises a random access report of a first primary secondary cell of the terminal and a random access report of a second primary secondary cell of the terminal, and the first primary secondary cell is a cell of the secondary base station.

9. The method according to claim 8, wherein the container further comprises an identifier of the first primary secondary cell and an identifier of the second primary secondary cell.

10. The method according to claim 8 or 9, wherein the random access report of the first primary secondary cell comprises a random access report of a first secondary cell, and the first secondary cell is a secondary cell in a secondary cell group corresponding to the first primary secondary cell.

11. The method according to any one of claims 8 to 10, wherein when the primary base station is incapable of directly communicating with the first secondary base station, receiving the container from the primary base station of the terminal specifically comprises:
receiving the container from a first primary base station corresponding to the first primary secondary cell, wherein the first primary base station is capable of directly communicating with the first secondary base station.

12. A communication apparatus, comprising a module configured to perform the method according to any one of claims 1 to 3, comprising a module configured to perform the method according to any one of claims 4 to 7, or comprising a module configured to perform the method according to any one of claims 8 to 11.

13. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to: implement, through a logic circuit or by executing code instructions, the method according to any one of claims 1 to 3, the method according to any one of claims 4 to 7, or the method according to any one of claims 8 to 11.

14. A chip, comprising a processor, wherein the processor is coupled to a memory, the memory is configured to store a computer program, and the processor is configured to execute the computer program stored in the memory to implement the method according to any one of claims 1 to 3, the method according to any one of claims 4 to 7, or the method according to any one of claims 8 to 11.

15. A computer-readable storage medium, wherein the storage medium stores a computer program or instructions; and when the computer program or the instructions are executed by a communication apparatus, the method according to any one of claims 1 to 3, the method according to any one of claims 4 to 7, or the method according to any one of claims 8 to 11 is implemented.

16. A computer program product, comprising a computer program, wherein when the computer program is run, the method according to any one of claims 1 to 3, the method according to any one of claims 4 to 7, or the method according to any one of claims 8 to 11 is implemented.
